(19) Europäisches Patentamt
European Patent Office
Office européen des brevets

(11) **EP 3 093 839 A1**

(12) **EUROPEAN PATENT APPLICATION**

(43) Date of publication:
**16.11.2016  Bulletin 2016/46**

(51) Int Cl.:
**G09G 3/36** (2006.01)          **G02F 1/1333** (2006.01)
**G06F 3/044** (2006.01)

(21) Application number: **15180941.5**

(22) Date of filing: **13.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.05.2015  US 201562160948 P**
                    **06.07.2015  US 201562189033 P**

(71) Applicant: **Himax Technologies Limited**
**Tainan City (TW)**

(72) Inventors:
• **HUANG, Guan-Ying**
  **74148 Tainan City (TW)**
• **WANG, Wei-Song**
  **74148 Tainan City (TW)**
• **CHANG, Yaw-Guang**
  **74148 Tainan City (TW)**

(74) Representative: **Karakatsanis, Georgios**
**Haft Karakatsanis Patentanwaltskanzlei**
**Dietlindenstrasse 18**
**80802 München (DE)**

Remarks:
Amended claims in accordance with Rule 137(2) EPC.

(54) **IN-CELL TOUCH SCREEN AND A METHOD OF DRIVING THE SAME**

(57)    The present invention is directed to a method of driving an in-cell touch screen. In one embodiment, adjacent common voltage (VCOM) electrodes, a source line and/or a gate line is set high-impedance, such that an equivalent capacitor is not possessed by the current VCOM electrode. In another embodiment, a gate line is set high-impedance in the touch sensing mode. A voltage waveform of the current VCOM electrode is applied to adjacent VCOM electrodes abutting the current VCOM electrode and/or to a source line, such that an equivalent capacitor has no effect on the current VCOM electrode.

FIG.3

Description

BACKGROUND OF THE INVENTION

1. FIELD OF THE INVENTION

The present invention generally relates to a touch screen, and more particularly to an in-cell touch screen.

2. DESCRIPTION OF RELATED ART

A touch screen is an input/output device that combines touch technology and display technology to enable users to directly interact with what is displayed. A capacitor-based touch panel is a commonly used touch panel that utilizes capacitive coupling effect to detect touch position. Specifically, capacitance corresponding to the touch position changes and is thus detected, when a finger touches a surface of the touch panel.

In order to produce thinner touch screens, in-cell technology has been adopted that eliminates one or more layers by building capacitors inside the display. Conventional in-cell touch screens, however, possesses substantive parasitic capacitors that form a large load, thereby affecting sensitivity of the touch screen. Accordingly, a need has arisen to propose a novel scheme for driving an in-cell touch screen with enhanced touch sensitivity.

SUMMARY OF THE INVENTION

In view of the foregoing, it is an object of the embodiment of the present invention to provide a method of driving an in-cell touch screen in order to reduce capacitance of the parasitic capacitors, or to reduce power consumption.

According to one embodiment, a touch screen has a common voltage (VCOM) layer divided into VCOM electrodes which act as sensing points in a touch sensing mode. In one embodiment, adjacent VCOM electrodes abutting a current VCOM electrode, a source line underlying the current VCOM electrode, and/or a gate line underlying the current VCOM electrode is set high-impedance in the touch sensing mode, such that an equivalent capacitor is not possessed by the current VCOM electrode, thereby substantially reducing a load at the sensing point. In another embodiment, a gate line underlying a current VCOM electrode is set high-impedance in the touch sensing mode. A voltage waveform of the current VCOM electrode is applied to adjacent VCOM electrodes abutting the current VCOM electrode and/or to a source line underlying the current VCOM electrode, such that an equivalent capacitor has no effect on the current VCOM electrode, thereby substantially reducing a load at the sensing point.

BRIEF DESCRIPTION OF THE DRAWINGS

FIG. 1 schematically shows a perspective view of a capacitive in-cell touch screen according to an embodiment of the present invention;
FIG. 2 shows the VCOM layer of FIG. 1;
FIG. 3 shows a circuit diagram illustrating equivalent capacitors among the VCOM electrodes, the source lines and the gate lines of FIG. 1;
FIG. 4 shows a circuit diagram illustrating equivalent capacitors among the VCOM electrodes, the source lines and the gate lines according to a first embodiment of the present invention;
FIG. 5 shows a circuit diagram illustrating equivalent capacitors among the VCOM electrodes, the source lines and the gate lines according to a second embodiment of the present invention;
FIG. 6 shows voltage waveforms of a current VCOM electrode and the underlying source line according to a third embodiment of the present invention;
FIG. 7 shows voltage waveforms of a current VCOM electrode and the underlying source line according to a fourth embodiment of the present invention;
FIG. 8 shows voltage waveforms of a current VCOM electrode and the underlying source line according to a fifth embodiment of the present invention;
FIG. 9 shows voltage waveforms of a current VCOM electrode and the underlying source line according to a sixth embodiment of the present invention;
FIG. 10 shows a circuit diagram illustrating equivalent capacitors among the VCOM electrodes, the source lines and the gate lines of FIG. 1;
FIG. 11 shows a circuit diagram illustrating equivalent capacitors among the VCOM electrodes, the source lines and the gate lines according to a seventh embodiment of the present invention; and
FIG. 12A, FIG. 12B and FIG. 12C show voltage waveforms of VCOM electrodes, the underlying source line and the underlying gate line.

DETAILED DESCRIPTION OF THE INVENTION

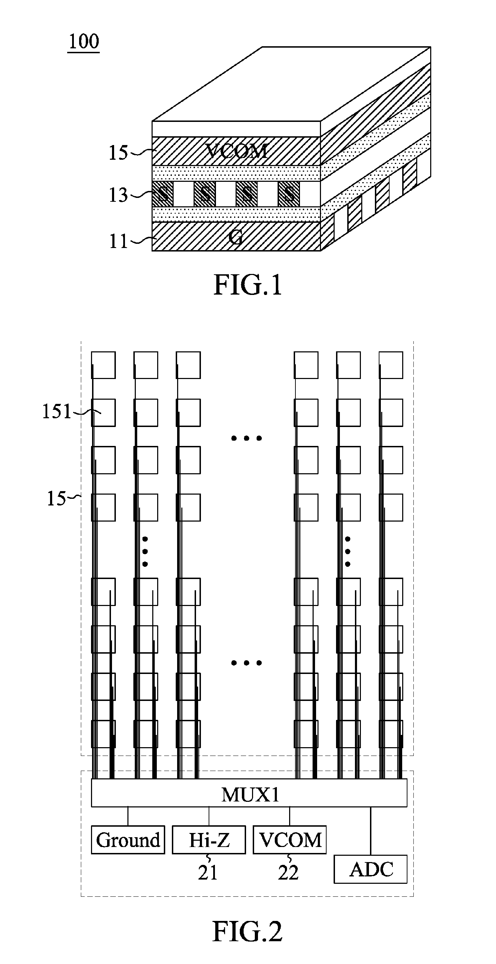

FIG. 1 schematically shows a perspective view of a capacitive in-cell touch screen 100 according to an embodiment of the present invention. The self-capacitance in-cell touch screen (hereinafter touch screen) 100 primarily includes, from bottom up, gate (G) lines 11, source (S) lines 13 and a common voltage (VCOM) layer 15, which are isolated from each other. For brevity, some components of the touch screen 100 are not shown. For example, a liquid crystal layer may be disposed above the VCOM layer 15.

Specifically, gate lines 11 are disposed latitudinally or in rows, and source lines 13 are disposed longitudinally or in columns. The VCOM layer 15 is divided into VCOM electrodes 151 as exemplified in FIG. 2, which act as sensing points (or receiving (RX) electrodes) in a touch sensing mode, and the VCOM electrodes 151 are connected to a common voltage, e.g., a direct-current (DC) voltage, in a display mode.

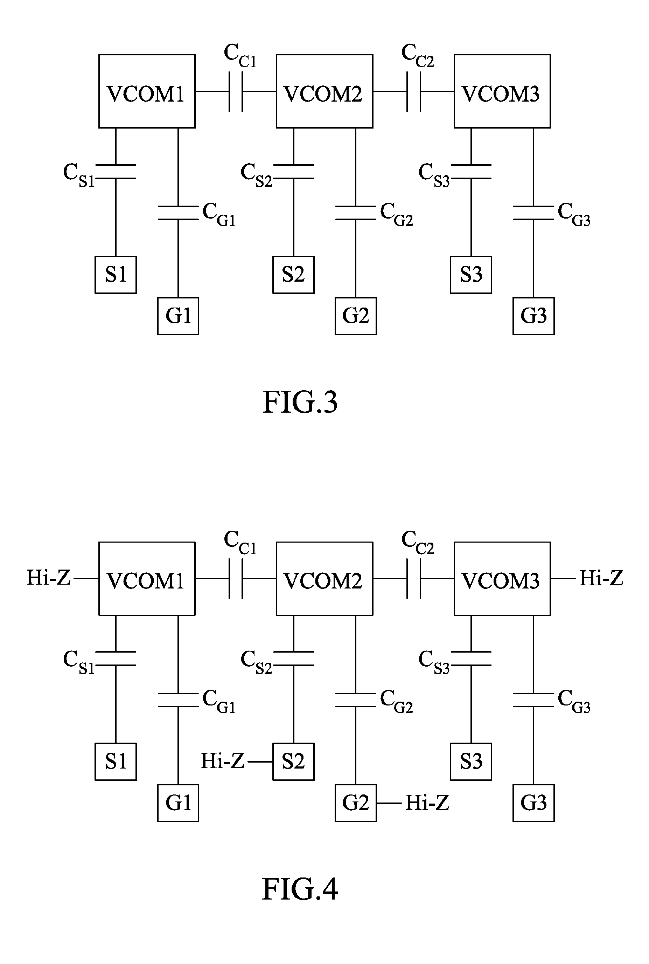

As the VCOM electrodes 151, the source lines 13 and the gate lines 11 are close to each other for a compact touch screen 100, parasitic capacitors are possessed by the touch screen 100. FIG. 3 shows a circuit diagram illustrating equivalent capacitors among the VCOM electrodes 151, the source lines 13 and the gate lines 11. VCOM1, VCOM2 and VCOM3 represent three adjacent VCOM electrodes 151. $C_{C1}$ and $C_{C2}$ represent equivalent capacitors between the VCOM electrodes 151. $C_{S1}$, $C_{S2}$ and $C_{S3}$ represent equivalent capacitors between the VCOM electrodes 151 (i.e., VCOM1, VCOM2 and VCOM3) and underlying source lines 13, respectively. $C_{G1}$, $C_{G2}$ and $C_{G3}$ represent equivalent capacitors between the VCOM electrodes 151 (i.e., VCOM1, VCOM2 and VCOM3) and underlying gate lines 11, respectively. Each sensing point (or VCOM electrodes 151) possesses a total capacitance of $(C_{CX}+C_{SX}+C_{GX})$ (where X is 1, 2, or 3), which results in a load that affects sensitivity of the touch screen 100. In order to reduce capacitance of the parasitic capacitors, some embodiments are thus proposed.

FIG. 4 shows a circuit diagram illustrating equivalent capacitors among the VCOM electrodes 151, the source lines 13 and the gate lines 11 according to a first embodiment of the present invention. In the embodiment, VCOM1, VCOM2 and VCOM3 are under touch sensing in turn. When a current VCOM electrode 151 (e.g., VCOM2) is currently under touch sensing, adjacent VCOM electrodes 151 (e.g., VCOM1 and VCOM3) are set high-impedance (Hi-Z) or floating, for example, by a high-impedance unit 21 shown in FIG. 2. Further, the source line 13 (e.g., S2) underlying the current VCOM electrode 151 and the gate line 11 (e.g., G2) underlying the current VCOM electrode 151 are set high-impedance (Hi-Z) or floating. Accordingly, the equivalent capacitors $C_{C1}$, $C_{C2}$, $C_{S2}$ and $C_{G2}$ are no longer possessed by the current VCOM electrode 151 (or the sensing point), thereby substantially reducing the load at the sensing point.

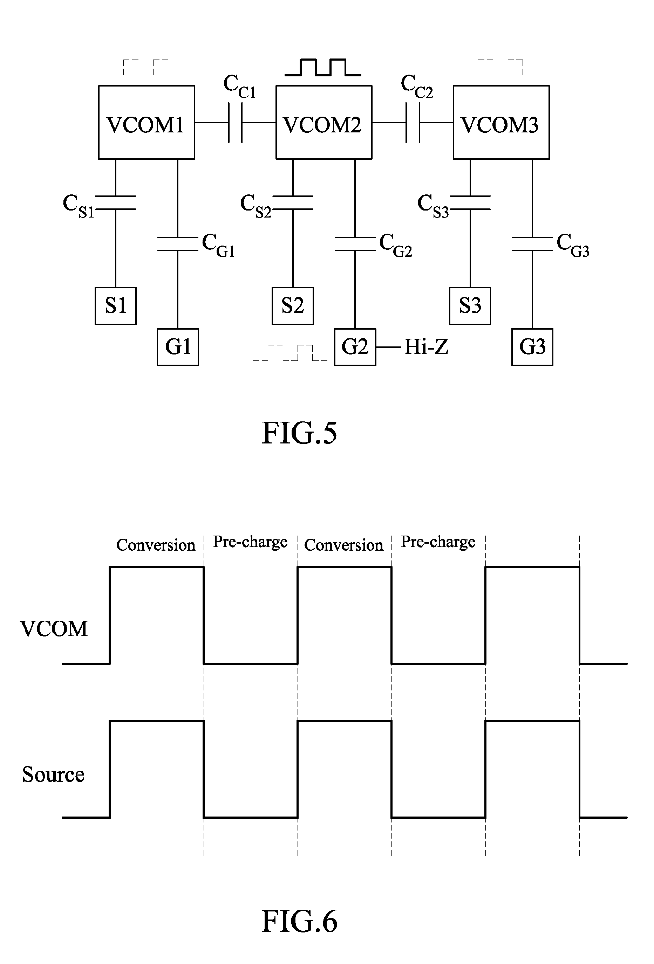

FIG. 5 shows a circuit diagram illustrating equivalent capacitors among the VCOM electrodes 151, the source lines 13 and the gate lines 11 according to a second embodiment of the present invention. In the embodiment, VCOM1, VCOM2 and VCOM3 are under touch sensing in turn. When a current VCOM electrode 151 (e.g., VCOM2) is currently under touch sensing, a voltage waveform at the current VCOM electrode 151 is applied to adjacent VCOM electrodes 151 (e.g., VCOM1 and VCOM3), for example, by a VCOM unit 22 shown in FIG. 2. Accordingly, the adjacent VCOM electrodes 151 and the current VCOM electrode 151 operate simultaneously. The voltage waveform at the current VCOM electrode 151 is also applied to the source line 13 (e.g., S2) underlying the current VCOM electrode 151. Accordingly, the current VCOM electrode 151 and the underlying source line 13 operate simultaneously. As two ends of an equivalent capacitor (e.g., $C_{C1}$, $C_{C2}$ or $C_{S2}$) have the same voltage waveform or operates simultaneously, the equivalent capacitor therefore has no effect on the current VCOM electrode 151 (or the sensing point). Further, the gate line 11 (e.g., G2) underlying the current VCOM electrode 151 is set high-impedance (Hi-Z) or floating. Accordingly, the equivalent capacitor $C_{G2}$ is no longer possessed by the current VCOM electrode 151 (or the sensing point), thereby substantially reducing the load at the sensing point.

FIG. 6 shows voltage waveforms of a current VCOM electrode 151 and the underlying source line 13 according to a third embodiment of the present invention. In this embodiment, the voltage waveform of the current VCOM electrode 151 is applied to the underlying source line 13 during a conversion phase and a pre-charge phase, which compose a sensing period.

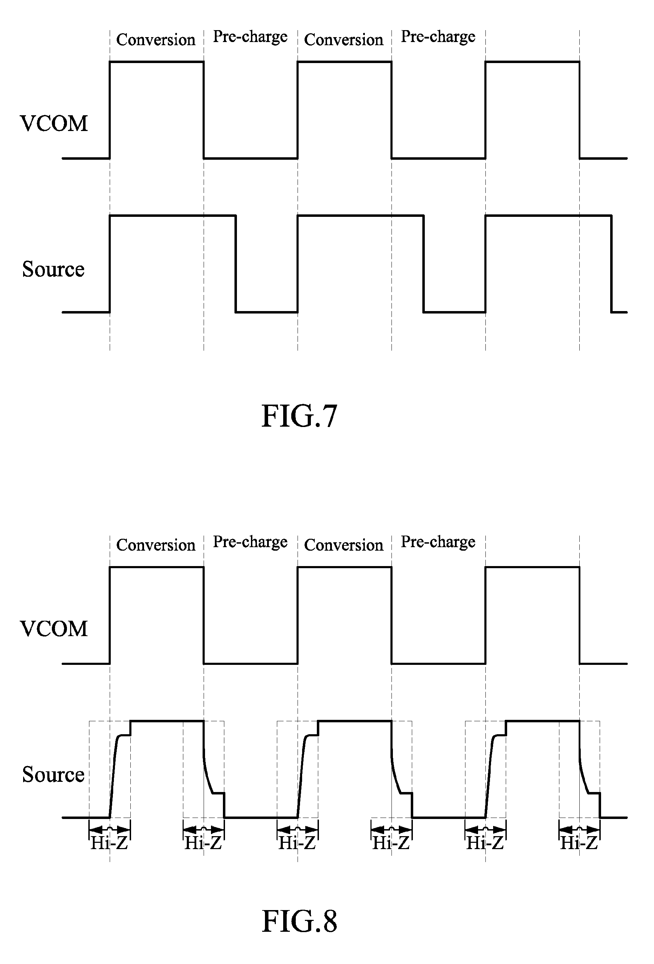

In practice, the equivalent capacitor due to the source line 13 has effect on touch sensing result only in the conversion, but has no effect on the touch sensing result in the pre-charge phase. Accordingly, as shown in FIG. 7, a fourth embodiment of the present invention, the voltage waveform of the current VCOM electrode 151 is applied to the underlying source line 13 only during a conversion phase.

FIG. 8 shows voltage waveforms of a current VCOM electrode 151 and the underlying source line 13 according to a fifth embodiment of the present invention. In the embodiment, the voltage waveform of the current VCOM electrode 151 is applied to the underlying source line 13 only when the voltage waveform becomes stable in the conversion phase and the pre-charge phase. During sub-periods when the voltage waveform is not stable or sub-periods of transition (from high level to low level or from low level to high level), the source line 13 (e.g., S2) underlying the current VCOM electrode 151 is set high-impedance (Hi-Z) or floating, thereby reducing power consumption. It is noted that, during the sub-periods of transition, the voltage at the source line 13 may be pulled up or down via the equivalent capacitor (e.g., $C_{S2}$).

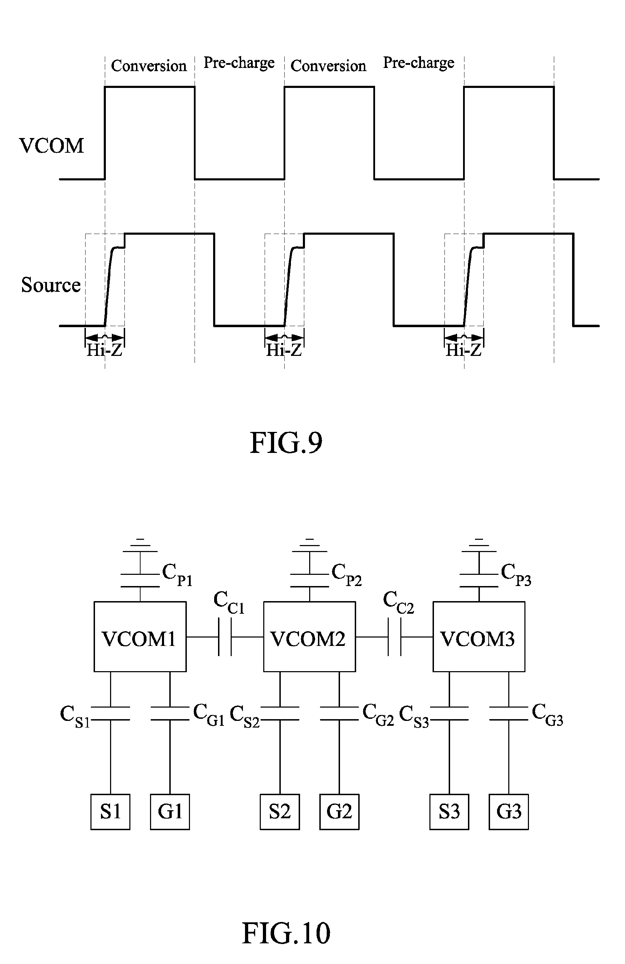

As described above that the equivalent capacitor due to the source line 13 has effect on touch sensing result only in the conversion, the voltage waveform of the current VCOM electrode 151 is applied to the underlying source line 13 only when the voltage waveform becomes stable in the conversion phase, as shown in FIG. 9, a sixth embodiment of the present invention. During sub-periods when the voltage waveform is not stable or sub-periods of transition, the source line 13 (e.g., S2) underlying the current VCOM electrode 151 is set high-impedance (Hi-Z) or floating, thereby reducing power consumption. Similar to the fifth embodiment (FIG. 8), during the sub-periods of transition, the voltage at the source line 13 may be pulled up via the equivalent capacitor (e.g., $C_{S2}$).

FIG. 10 shows a circuit diagram illustrating equivalent capacitors among the VCOM electrodes 151, the source lines 13 and the gate lines 11. VCOM1, VCOM2 and VCOM3 represent three adjacent VCOM electrodes 151. $C_{C1}$ and $C_{C2}$ represent equivalent capacitors between the VCOM electrodes 151. $C_{S1}$, $C_{S2}$ and $C_{S3}$ represent equivalent capacitors between the VCOM electrodes 151 (i.e., VCOM1, VCOM2 and VCOM3) and underlying source lines 13, respectively. $C_{G1}$, $C_{G2}$ and $C_{G3}$ represent equivalent capacitors between the VCOM electrodes 151 (i.e., VCOM1, VCOM2 and VCOM3) and underlying gate lines 11, respectively. $C_{P1}$, $C_{P2}$ and $C_{P3}$ represent equivalent capacitors pertaining to the VCOM electrodes 151 (i.e., VCOM1, VCOM2, VCOM3) caused by other than the source lines 13 and the gate lines 11. Each sensing point (or VCOM electrodes 151) possesses a total capacitance of $(C_{CX}+C_{SX}+C_{GX}+C_{PX})$ (where X is 1, 2, or 3), which results in a load that affects sensitivity of the touch screen 100. In order to reduce capacitance of the parasitic capacitors, further embodiments are thus proposed.

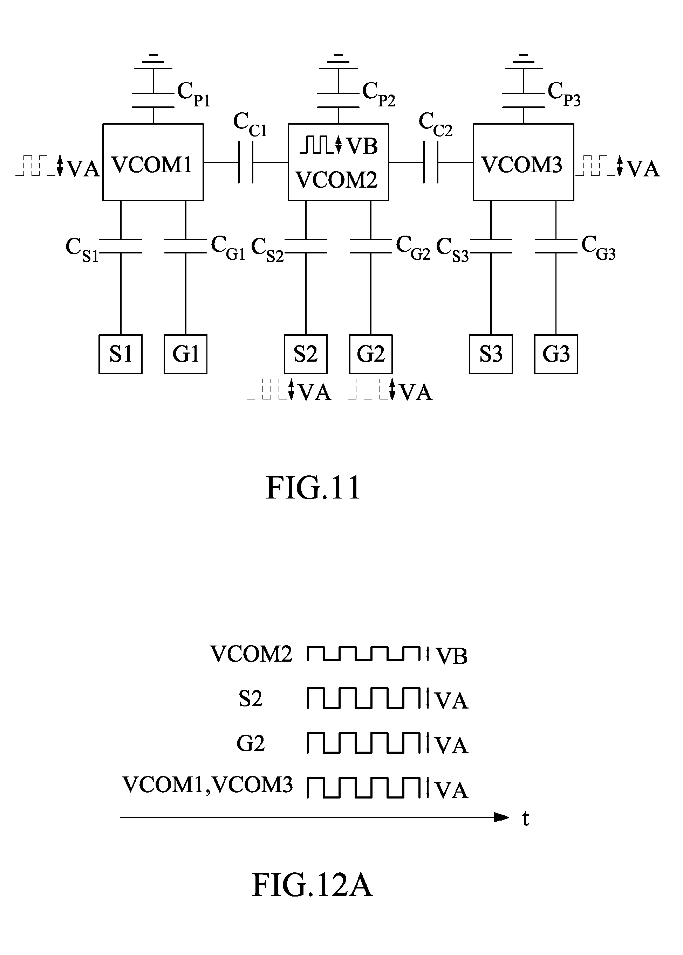

FIG. 11 shows a circuit diagram illustrating equivalent capacitors among the VCOM electrodes 151, the source lines 13 and the gate lines 11 according to a seventh embodiment of the present invention. In the embodiment, VCOM1, VCOM2 and VCOM3 are under touch sensing in turn. When a current VCOM electrode 151 (e.g., VCOM2) is currently under touch sensing having a voltage waveform with a first amplitude VB, the same voltage waveform with a second amplitude VA is applied to adjacent VCOM electrodes 151 (e.g., VCOM1 and VCOM3), for example, by a VCOM unit 22 shown in FIG. 2. The same voltage waveform with the second amplitude VA is also applied to the source line 13 (e.g., S2) and the gate line 11 (e.g., G2) underlying the current VCOM electrode 151.

Let $Q_{C1}$ represents the charge contributed to the VCOM electrode 151 by the equivalent capacitor $C_{C1}$, $Q_{C2}$ represents the charge contributed to the VCOM electrode 151 by the equivalent capacitor $C_{C2}$, $Q_{S2}$ represents the charge contributed to the VCOM electrode 151 by the equivalent capacitor $C_{S2}$, $Q_{G2}$ represents the charge contributed to the VCOM electrode 151 by the equivalent capacitor $C_{G2}$, $Q_{P2}$ represents the charge contributed to the VCOM electrode 151 by the equivalent capacitor $C_{P2}$, and $Q_{total}$ represents the charge contributed to the VCOM electrode 151 by the total capacitance $(C_{C1}+C_{C2}+C_{S2}+C_{G2}+C_{P2})$:

$$Q_{C1}=(VB-VA)*C_{C1}$$

$$Q_{C2}=(VB-VA)*C_{C2}$$

$$Q_{S2}=(VB-VA)*C_{S2}$$

$$Q_{G2}=(VB-VA)*C_{G2}$$

$$Q_{P2}=VB*C_{P2}$$

$$Q_{total}=Q_{C1}+Q_{C2}+Q_{S2}+Q_{G2}+Q_{P2}$$

It is noted that, if the second amplitude VA is greater than the first amplitude VB (i.e., VA>VB), the charges $Q_{C1}$, $Q_{C2}$, $Q_{S2}$ and $Q_{G2}$ are inverse to the charge $Q_{P2}$, thereby compensating for the effects caused by $Q_{P2}$.

The present embodiment is more useable when multiple channels are sensed concurrently, in that case the equivalent capacitor $C_{P2}$ (that is, the equivalent capacitors pertaining to the VCOM electrodes 151 caused other than the source lines 13 and the gate lines 11) predominates with greater effects on the touch sensitivity.

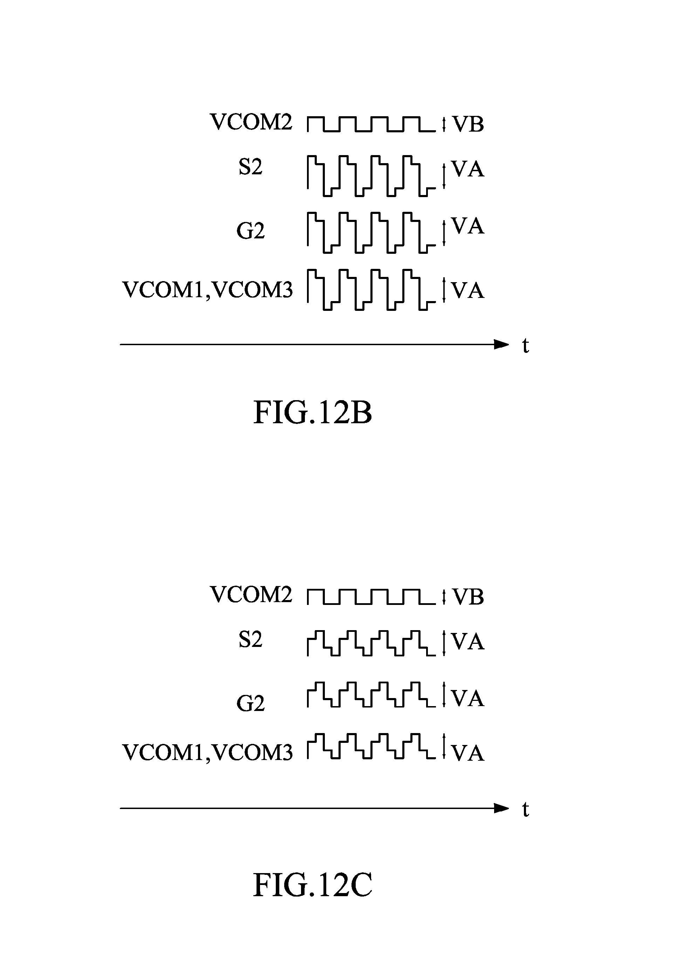

FIG. 12A, FIG. 12B and FIG. 12C show voltage waveforms of VCOM electrodes 151, the underlying source line 13 (e.g., S2) and the underlying gate line 11 (e.g., G2). It is observed in FIG. 12A that the voltage waveform applied to the underlying source line 13 (e.g., S2), the underlying gate line 11 (e.g., G2) and the adjacent VCOM electrodes 151 (e.g., VCOM1 and VCOM3) has a fixed amplitude (i.e., the second amplitude VA) during a conversion phase. However, in FIG. 12B, the applied voltage waveform overdrives before settling on the second amplitude VA in the conversion phase and the pre-charge phase. Alternatively, in FIG. 12C, the applied voltage waveform underdrives before settling on the second amplitude VA in the conversion phase and the pre-charge phase.

Although specific embodiments have been illustrated and described, it will be appreciated by those skilled in the art that various modifications may be made without departing from the scope of the present invention, which is intended to be limited solely by the appended claims.

**Claims**

1. A method of driving an in-cell touch screen, comprising:

providing a touch screen with a common voltage (VCOM) layer divided into VCOM electrodes which act as sensing points in a touch sensing mode; and
setting adjacent VCOM electrodes abutting a current VCOM electrode, a source line underlying the current VCOM electrode, and/or a gate line underlying the current VCOM electrode high-impedance in the touch sensing mode, such that an equivalent capacitor is not possessed by the current VCOM electrode, thereby substantially reducing a load at the sensing point.

2. The method of claim 1, wherein the adjacent VCOM electrodes abutting the current VCOM electrode are set high-impedance, the source line underlying the current VCOM electrode is set high-impedance, and the gate line underlying the current VCOM electrode is set high-impedance.

3. A method of driving an in-cell touch screen, comprising:

> providing a touch screen with a common voltage (VCOM) layer divided into VCOM electrodes which act as sensing points in a touch sensing mode;
> setting a gate line underlying a current VCOM electrode high-impedance in the touch sensing mode; and
> applying a voltage waveform of the current VCOM electrode to adjacent VCOM electrodes abutting the current VCOM electrode and/or to a source line underlying the current VCOM electrode, such that an equivalent capacitor has no effect on the current VCOM electrode, thereby substantially reducing a load at the sensing point.

4. The method of claim 3, wherein the voltage waveform of the current VCOM electrode is applied during both a conversion phase and a pre-charge phase of a sensing period; and the voltage waveform of the current VCOM electrode is applied only when the voltage waveform becomes stable in the conversion phase and the pre-charge phase.

5. The method of claim 3, wherein the voltage waveform of the current VCOM electrode is applied during only a conversion phase of a sensing period.

6. The method of claim 4 or 5, wherein the source line underlying the current VCOM electrode is set high-impedance during sub-periods of transition from low level to high level.

7. A method of driving an in-cell touch screen, comprising:

> providing a touch screen with a common voltage (VCOM) layer divided into VCOM electrodes which act as sensing points in a touch sensing mode; and
applying a voltage waveform of a current VCOM electrode to adjacent VCOM electrodes abutting the current VCOM electrode, to a gate line underlying the current VCOM electrode and to a source line underlying the current VCOM electrode, such that an equivalent capacitor has no effect on the current VCOM electrode, thereby substantially reducing a load at the sensing point;
wherein the applied voltage waveform has an amplitude larger than a voltage waveform at the current VCOM electrode.

8. The method of claim 7, wherein the applied voltage waveform overdrives before settling on a predetermined amplitude in the conversion phase and the pre-charge phase; and the applied voltage waveform underdrives before settling on a predetermined amplitude in the conversion phase and the pre-charge phase.

9. An in-cell touch screen, comprising:

> gate lines disposed latitudinally;
> source lines disposed longitudinally; and
> a common voltage (VCOM) layer divided into VCOM electrodes which act as sensing points in a touch sensing mode, and are connected to a common voltage in a display mode;
> wherein adjacent VCOM electrodes abutting a current VCOM electrode, a source line underlying the current VCOM electrode, and/or a gate line underlying the current VCOM electrode is set high-impedance in the touch sensing mode, such that an equivalent capacitor is not possessed by the current VCOM electrode, thereby substantially reducing a load at the sensing point.

10. An in-cell touch screen, comprising:

> gate lines disposed latitudinally;
> source lines disposed longitudinally;
> a common voltage (VCOM) layer divided into VCOM electrodes which act as sensing points in a touch sensing mode, and are connected to a common voltage in a display mode;
> wherein a gate line underlying a current VCOM electrode is set high-impedance in the touch sensing mode; and
> a voltage waveform of the current VCOM electrode is applied to adjacent VCOM electrodes abutting the current VCOM electrode and/or to a source line underlying the current VCOM electrode, such that an equivalent capacitor has no effect on the current VCOM electrode, thereby substantially reducing a load at the sensing point.

**11.** The in-cell touch screen of claim 10, wherein the voltage waveform of the current VCOM electrode is applied during both a conversion phase and a pre-charge phase of a sensing period; and the voltage waveform of the current VCOM electrode is applied only when the voltage waveform becomes stable in the conversion phase and the pre-charge phase.

**12.** The in-cell touch screen of claim 10, wherein the voltage waveform of the current VCOM electrode is applied during only a conversion phase of a sensing period.

**13.** The in-cell touch screen of claim 11 or 12, wherein the source line underlying the current VCOM electrode is set high-impedance during sub-periods of transition from low level to high level.

**14.** An in-cell touch screen, comprising:

gate lines disposed latitudinally;
source lines disposed longitudinally;
a common voltage (VCOM) layer divided into VCOM electrodes which act as sensing points in a touch sensing mode, and are connected to a common voltage in a display mode;
wherein a voltage waveform of a current VCOM electrode is applied to adjacent VCOM electrodes abutting the current VCOM electrode, to a gate line underlying the current VCOM electrode and to a source line underlying the current VCOM electrode, such that an equivalent capacitor has no effect on the current VCOM electrode, thereby substantially reducing a load at the sensing point;
wherein the applied voltage waveform has an amplitude larger than a voltage waveform at the current VCOM electrode.

**15.** The in-cell touch screen of claim 14, wherein the applied voltage waveform overdrives before settling on a predetermined amplitude in the conversion phase and the pre-charge phase; and the applied voltage waveform underdrives before settling on a predetermined amplitude in the conversion phase and the pre-charge phase.

**Amended claims in accordance with Rule 137(2) EPC.**

**1.** A method of driving a self-capacitance in-cell touch screen (100), comprising:

providing a touch screen with a common voltage (VCOM) layer (15) divided into VCOM electrodes (151); and
setting adjacent VCOM electrodes (VCOM1/VCOM3) abutting a current VCOM electrode (VCOM2), a source line (13) underlying the current VCOM electrode, and/or a gate line (11) underlying the current VCOM electrode high-impedance in a touch sensing mode, such that an equivalent capacitor ($C_{CX}/C_{SX}/C_{GX}$) is not possessed by the current VCOM electrode,

**characterized in that** all the VCOM electrodes of the VCOM layer act as sensing points in the touch sensing mode, thereby substantially reducing a load at the sensing point.

**2.** The method of claim 1, wherein the adjacent VCOM electrodes abutting the current VCOM electrode are set high-impedance, the source line underlying the current VCOM electrode is set high-impedance, and the gate line underlying the current VCOM electrode is set high-impedance.

**3.** A method of driving a self-capacitance in-cell touch screen (100), comprising:

providing a touch screen with a common voltage (VCOM) layer (15) divided into VCOM electrodes (151);
setting a gate line (11) underlying a current VCOM electrode (VCOM2) high-impedance in a touch sensing mode; and
applying a voltage waveform of the current VCOM electrode to adjacent VCOM electrodes (VCOM1/CVOM3) abutting the current VCOM electrode and/or to a source line (13) underlying the current VCOM electrode, such that an equivalent capacitor ($C_{CX}/C_{SX}/C_{GX}$) has no effect on the current VCOM electrode,

**characterized in that** all the VCOM electrodes of the VCOM layer act as sensing points in the touch sensing mode, thereby substantially reducing a load at the sensing point.

**4.** The method of claim 3, wherein the voltage waveform of the current VCOM electrode is applied during both a conversion phase and a pre-charge phase of a sensing period; and the voltage waveform of the current VCOM electrode is applied only when the voltage waveform becomes stable in the conversion phase and the pre-charge phase.

**5.** The method of claim 3, wherein the voltage waveform of the current VCOM electrode is applied during only a conversion phase of a sensing period.

**6.** The method of claim 4 or 5, wherein the source line underlying the current VCOM electrode is set high-impedance during sub-periods of transition from low level to high level.

7. A method of driving a self-capacitance in-cell touch screen (100), comprising:

> providing a touch screen with a common voltage (VCOM) layer (15) divided into VCOM electrodes (151); and
> applying a voltage waveform of a current VCOM electrode (VCOM2) to adjacent VCOM electrodes (VCOM1/VCOM3) abutting the current VCOM electrode, to a gate line (11) underlying the current VCOM electrode and to a source line (13) underlying the current VCOM electrode, such that an equivalent capacitor ($C_{CX}/C_{SX}/C_{GX}$) has no effect on the current VCOM electrode;

> wherein the applied voltage waveform has an amplitude (VA) larger than a voltage waveform (VB) at the current VCOM electrode,
> **characterized in that** all the VCOM electrodes of the VCOM layer act as sensing points in a touch sensing mode, thereby substantially reducing a load at the sensing point.

8. The method of claim 7, wherein the applied voltage waveform overdrives before settling on a predetermined amplitude in the conversion phase and the pre-charge phase; and the applied voltage waveform underdrives before settling on a predetermined amplitude in the conversion phase and the pre-charge phase.

9. A self-capacitance in-cell touch screen (100), comprising:

> gate lines (11) disposed latitudinally;
> source lines (13) disposed longitudinally; and
> a common voltage (VCOM) layer (15) divided into VCOM electrodes (151) which are connected to a common voltage in a display mode;

> wherein adjacent VCOM electrodes (VCOM1/VCOM3) abutting a current VCOM electrode (VCOM2), a source line (13) underlying the current VCOM electrode, and/or a gate line (11) underlying the current VCOM electrode is set high-impedance in a touch sensing mode, such that an equivalent capacitor ($C_{CX}/C_{SX}/C_{GX}$) is not possessed by the current VCOM electrode,
> **characterized in that** all the VCOM electrodes of the VCOM layer act as sensing points in the touch sensing mode, thereby substantially reducing a load at the sensing point.

10. A self-capacitance in-cell touch screen (100), comprising:

> gate lines (11) disposed latitudinally;
> source lines (13) disposed longitudinally;
> a common voltage (VCOM) layer (15) divided into VCOM electrodes (151) which are connected to a common voltage in a display mode;
> wherein a gate line (11) underlying a current VCOM electrode (VCOM2) is set high-impedance in a touch sensing mode; and
> a voltage waveform of the current VCOM electrode is applied to adjacent VCOM electrodes (VCOM1/VCOM3) abutting the current VCOM electrode and/or to a source line (13) underlying the current VCOM electrode, such that an equivalent capacitor ($C_{CX}/C_{SX}/C_{GX}$) has no effect on the current VCOM electrode,

**characterized in that** all the VCOM electrodes of the VCOM layer act as sensing points in the touch sensing mode, thereby substantially reducing a load at the sensing point.

11. The self-capacitance in-cell touch screen of claim 10, wherein the voltage waveform of the current VCOM electrode is applied during both a conversion phase and a pre-charge phase of a sensing period; and the voltage waveform of the current VCOM electrode is applied only when the voltage waveform becomes stable in the conversion phase and the pre-charge phase.

12. The self-capacitance in-cell touch screen of claim 10, wherein the voltage waveform of the current VCOM electrode is applied during only a conversion phase of a sensing period.

13. The self-capacitance in-cell touch screen of claim 11 or 12, wherein the source line underlying the current VCOM electrode is set high-impedance during sub-periods of transition from low level to high level.

14. A self-capacitance in-cell touch screen (100), comprising:

> gate lines (11) disposed latitudinally;
> source lines (13) disposed longitudinally;
> a common voltage (VCOM) layer (15) divided into VCOM electrodes (151) which are connected to a common voltage in a display mode;
> wherein a voltage waveform of a current VCOM electrode (VCOM2) is applied to adjacent VCOM electrodes (VCOM1/VCOM3) abutting the current VCOM electrode, to a gate line (11) underlying the current VCOM electrode and to a source line (13) underlying the current VCOM electrode, such that an equivalent capacitor ($C_{CX}/C_{SX}/C_{GX}$) has no effect on the current VCOM electrode;
wherein the applied voltage waveform has an amplitude (VA) larger than a voltage waveform (VB) at the current VCOM electrode, **characterized in that** all the VCOM electrodes of the VCOM layer act as sensing points in a touch sensing mode, thereby substantially reducing a load at the sensing point.

15. The self-capacitance in-cell touch screen of claim 14, wherein the applied voltage waveform overdrives before settling on a predetermined amplitude in the conversion phase and the pre-charge phase; and the applied voltage waveform underdrives before settling on a predetermined amplitude in the conversion phase and the pre-charge phase.

<u>100</u>

15 ~ VCOM

13 ~

11 ~ G

## FIG.1

151 ~

15 ~

MUX1

| Ground | Hi-Z | VCOM |
| --- | --- | --- |

21   22   ADC

## FIG.2

FIG.3

FIG.4

FIG.5

FIG.6

FIG.7

FIG.8

## FIG.9

## FIG.10

FIG.11

FIG.12A

VCOM2 ⎍⎍⎍⎍ ↕VB

S2 ⎍⎍⎍⎍ ↕VA

G2 ⎍⎍⎍⎍ ↕VA

VCOM1,VCOM3 ⎍⎍⎍⎍ ↕VA

→ t

## FIG.12B

VCOM2 ⎍⎍⎍⎍ ↕VB

S2 ⎍⎍⎍⎍ ↕VA

G2 ⎍⎍⎍⎍ ↕VA

VCOM1,VCOM3 ⎍⎍⎍⎍ ↕VA

→ t

## FIG.12C

Europäisches
Patentamt

European
Patent Office

Office européen
des brevets

# EUROPEAN SEARCH REPORT

Application Number

EP 15 18 0941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/285466 A1 (HAYASHI MAKOTO [JP]) 25 September 2014 (2014-09-25) | 1,9 | INV. G09G3/36 |
| Y | * paragraph [0089] - paragraph [0239]; figures 1-19 * | 2,3,10 | G02F1/1333 G06F3/044 |
| X | US 2013/033439 A1 (KIM CHEOLSE [KR] ET AL) 7 February 2013 (2013-02-07) | 1,9 | |
| Y | * paragraph [0032] - paragraph [0084]; | 2 | |
| A | figures 1-3 * | 3,10 | |
| Y | HIROSHI HAGA ET AL: "45.1: Touch Panel Embedded IPS-LCD with Parasitic Current Reduction Technique", S I D INTERNATIONAL SYMPOSIUM. DIGEST OF TECHNICAL PAPERS, vol. 41, no. 1, 28 May 2010 (2010-05-28), page 669, XP055218917, US ISSN: 0097-966X, DOI: 10.1889/1.3500555 * page 669, column 1, line 2 - page 672, column 2, line 7; figures 1-9 * | 2,3,10 | |

TECHNICAL FIELDS
SEARCHED    (IPC)

G09G
G02F
G06F

~~The present search report has been drawn up for all claims~~

| Place of search | Date of completion of the search | Examiner |
|---|---|---|
| Munich | 1 December 2015 | Harke, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 9, 10

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 18 0941

The Search Division considers that the present European patent application does not comply with the
requirements of unity of invention and relates to several inventions or groups of inventions, namely:

1. claims: 1-3, 9, 10

   The first invention concerns a method as defined in claim 1,
   i. e. a method of driving an in-cell touch screen,
   comprising: providing a touch screen with a common voltage
   (VCOM) layer divided into VCOM electrodes which act as
   sensing points in a touch sensing mode; and setting adjacent
   VCOM electrodes abutting a current VCOM electrode, a source
   line underlying the current VCOM electrode, and/or a gate
   line underlying the current VCOM electrode high-impedance in
   the touch sensing mode, such that an equivalent capacitor is
   not possessed by the current VCOM electrode, thereby
   substantially reducing a load at the sensing point, wherein,
   as claimed in claim 2, the adjacent VCOM electrodes abutting
   the current VCOM electrode are set high-impedance, the
   source line underlying the current VCOM electrode is set
   high-impedance, and the gate line underlying the current
   VCOM electrode is set high-impedance.
   ---

2. claims: 4-6, 11-13

   The second invention concerns a method as defined in claim
   3, i. e. a method of driving an in-cell touch screen,
   comprising: providing a touch screen with a common voltage
   (VCOM) layer divided into VCOM electrodes which act as
   sensing points in a touch sensing mode; setting a gate line
   underlying a current VCOM electrode high-impedance in the
   touch sensing mode; and applying a voltage waveform of the
   current VCOM electrode to adjacent VCOM electrodes abutting
   the current VCOM electrode and/or to a source line
   underlying the current VCOM electrode, such that an
   equivalent capacitor has no effect on the current VCOM
   electrode, thereby substantially reducing a load at the
   sensing point, wherein, as claimed in claim 4, the voltage
   waveform of the current VCOM electrode is applied during
   both a conversion phase and a pre-charge phase of a sensing
   period; and the voltage waveform of the current VCOM
   electrode is applied only when the voltage waveform becomes
   stable in the conversion phase and the pre-charge phase.
   ---

3. claims: 7, 8, 14, 15

   The third invention concerns a method as defined in claim 7,
   i. e. a method of driving an in-cell touch screen,
   comprising: providing a touch screen with a common voltage
   (VCOM) layer divided into VCOM electrodes which act as
   sensing points in a touch sensing mode; and applying a
   voltage waveform of a current VCOM electrode to adjacent
   VCOM electrodes abutting the current VCOM electrode, to a

Europäisches
Patentamt

European
Patent Office

Office européen
des brevets

**LACK OF UNITY OF INVENTION**
**SHEET B**

Application Number

EP 15 18 0941

The Search Division considers that the present European patent application does not comply with the requirements of unity of invention and relates to several inventions or groups of inventions, namely:

```
gate line underlying the current VCOM electrode and to a
source line underlying the current VCOM electrode, such that
an equivalent capacitor has no effect on the current VCOM
electrode, thereby substantially reducing a load at the
sensing point;wherein the applied voltage waveform has an
amplitude larger than a voltage waveform at the current VCOM
electrode.
                              ---
```

**ANNEX TO THE EUROPEAN SEARCH REPORT
ON EUROPEAN PATENT APPLICATION NO.**

EP 15 18 0941

This annex lists the patent family members relating to the patent documents cited in  the above-mentioned European search report.
The members are as contained in the European Patent Office EDP file on
The European Patent Office is in no way liable for these particulars which are merely given for the purpose of information.

01-12-2015

| Patent document cited in search report | | | Publication date | Patent family member(s) | | | Publication date |
|---|---|---|---|---|---|---|---|
| US 2014285466 | A1 | | 25-09-2014 | JP<br>US | 2014186537<br>2014285466 | A<br>A1 | 02-10-2014<br>25-09-2014 |
| US 2013033439 | A1 | | 07-02-2013 | CN<br>KR<br>US | 102914893<br>20130015582<br>2013033439 | A<br>A<br>A1 | 06-02-2013<br>14-02-2013<br>07-02-2013 |

EPO FORM P0459

For more details about this annex : see Official Journal of the European Patent Office, No. 12/82